# EUROPÄISCHE PATENTSCHRIFT

(11) **EP 3 358 109 B1**
(45) Veröffentlichungstag und Bekanntmachung des Hinweises auf die Patenterteilung: **15.07.2020**
(21) Anmeldenummer: 17154614.6
(22) Anmeldetag: 03.02.2017
(51) Int. Cl.: B60T 1/14, B60B 33/06, F16D 63/00, E04H 12/22, F16M 11/42

(54) **MOBILER STÄNDER FÜR EINEN ZU HALTENDEN GEGENSTAND**
MOBILE STAND FOR AN OBJECT TO BE HELD
SUPPORT MOBILE POUR UN OBJET À MAINTENIR

(43) Veröffentlichungstag der Anmeldung: 08.08.2018
(73) Patentinhaber: Nerger, Jürgen, 24983 Handewitt (DE); Teske, Heiko, 24983 Handewitt (DE)
(72) Erfinder: Nerger, Jürgen, 24983 Handewitt (DE); Teske, Heiko, 24983 Handewitt (DE)
(74) Vertreter: Seemann & Partner Patentanwälte mbB

(56) Entgegenhaltungen:
- EP-A1- 1 571 277
- EP-A1- 2 565 350
- WO-A2-2005/065279
- DE-A1- 2 119 257

## Beschreibung

Die Erfindung betrifft einen mobilen Ständer für einen zu haltenden Gegenstand, umfassend ein Standelement zum ortsfesten Aufstellen des Ständers auf einem Untergrund in einer Stand-Stellung, einen Rollenträger mit mindestens drei Rollen, die dazu vorgesehen sind, in einer Fahr-Stellung auf dem Untergrund abzurollen, so dass der Ständer mobil ist, eine Aufnahme, über die der zu haltende Gegenstand mit dem Ständer koppelbar ist, und eine Betätigungsvorrichtung, mit der das Standelement zwischen der Stand-Stellung und der Fahr-Stellung verschoben werden kann.

Ein solcher mobiler Ständer ist beispielsweise aus der EP 1 571 277 A1 oder aus der EP 2 565 350 A1 bekannt.

Der aus der EP 1 571 277 A1 bekannte mobile Ständer weist eine hohe Standfestigkeit und Stabilität auf, gleichzeitig ist die Verletzungsgefahr sehr gering. Der mobile Ständer zeichnet sich dadurch aus, dass mittels einer an einer Hebeeinrichtung angeordneten Betätigungsstange eine Relativbewegung zwischen einem Standfuß und einem Rollenträger bewirkt wird, wobei durch diese Bewegung ein Abstand zwischen dem Rollenträger und dem Standfuß verändert wird. Zum ortsfesten Abstellen des mobilen Ständers in einer Stand-Stellung wird der Standfuß auf einen Untergrund abgesenkt. In einer Fahr-Stellung wird der Standfuß vom Untergrund angehoben.

Ein solcher mobiler Ständer weist vielfach ein hohes Eigengewicht auf, welches bis zu 150 kg betragen kann. Dieses hohe Gewicht verleiht dem mobilen Ständer einen stabilen Stand. Gleichzeitig wirkt es jedoch auch auf den Standfuß, die Hebeeinrichtung und den Rollenträger. Beim Anheben des Rollenträgers, was zu einem gleichzeitigen Absenken des Standfußes führt, treten an der Hebeeinrichtung aufgrund des hohen Gewichtes auch hohe Drehmomente auf. Diese können dazu führen, dass die zur Betätigung der Hebeeinrichtung eingesetzte Betätigungsstange, die auch als Schubstange für den Ständer dient, in Richtung eines von dem Ständer gehaltenen Mastes, beispielsweise eines Sonnenschirms, beschleunigt wird. Wird die Betätigungsstange nicht stets sicher und mit einer gewissen Kraft geführt, so besteht das Risiko, dass bei einer solchen nicht vorgesehenen Handhabung des Ständers, die Betätigungsstange aus der Hand gleitet.

Aus diesem Grund umfasst der aus der EP 2 565 350 A1 bekannte mobile Ständer eine Kraftunterstützungseinrichtung, die beispielsweise in Form einer Zugfeder ausgeführt ist. Eine solche Zugfeder wirkt der Schwenkbewegung der Betätigungsstange, genauer dem auf die Betätigungsstange wirkenden Drehmoment, zumindest teilweise entgegen. Mit anderen Worten wird das aufgrund des hohen Gewichts des Standfußes auf die Betätigungsstange der Hebeeinrichtung wirkende Drehmoment durch die eingesetzte Kraftunterstützungseinrichtung zumindest teilweise kompensiert.

Sowohl bei dem aus der EP 1 571 277 A1 als auch bei dem aus der EP 2 565 350 A1 bekannten mobilen Ständer muss zum Anheben des Standfußes eine relativ große Kraft aufgewendet werden, da der Standfuß, wie eingangs bereits erwähnt, ein verhältnismäßig hohes Gewicht aufweist.

In DE 21 19 257 A1 ist ein fahrbarer Sonnenschirmfuß offenbart, bei dem durch Betätigen eines Fußhebels eine Schutzglocke gesenkt oder angehoben wird, so dass der Sonnenschirmfuß festgestellt oder freigegeben wird. Dieses Dokument offenbart alle Merkmale der Präambel des Anspruchs 1 und stellt den nächstliegenden Stand der Technik für den Gegenstand des Anspruchs 1 dar.

WO 2005/065279 A2 zeigt einen Schirmfuß, der eine Reihe von Lenkrollen zum Bewegen des Schirmfußes aufweist. Durch Ausfahren mehrerer Standbeine, beispielsweise mittels einer Münze, wird der Schirmfuß am Rollen gehindert.

Ausgehend von diesem Stand der Technik ist es eine Aufgabe der Erfindung, einen mobilen Ständer für einen zu haltenden Gegenstand anzugeben, der einerseits eine hohe Standfestigkeit aufgrund seines hohen Gewichtes hat, der aber andererseits auch einfach und sicher zu bedienen sein soll.

Die Aufgabe wird gelöst durch einen mobilen Ständer für einen zu haltenden Gegenstand, umfassend ein Standelement zum ortsfesten Aufstellen des Ständers auf einem Untergrund in einer Stand-Stellung, einen Rollenträger mit mindestens drei Rollen, die dazu vorgesehen sind, in einer Fahr-Stellung auf dem Untergrund abzurollen, so dass der Ständer mobil ist, eine Aufnahme, über die der zu haltende Gegenstand mit dem Ständer koppelbar ist, und eine Betätigungsvorrichtung, mit der das Standelement zwischen der Stand-Stellung und der Fahr-Stellung verschoben werden kann, wobei die Aufnahme an dem Rollenträger befestigt ist, wobei sich die Betätigungsvorrichtung am Rollenträger abstützt und dazu eingerichtet ist, auf das Standelement eine erste Kraft auszuüben, die in einer ersten vertikalen Richtung zumindest näherungsweise senkrecht auf den Untergrund zeigt und das Standelement in Richtung des Untergrunds in die Stand-Stellung verschiebt, wobei in der Stand-Stellung das Standelement auf dem Untergrund aufsitzt und der Rollenträger in einer der ersten vertikalen Richtung entgegengesetzten zweiten vertikalen Richtung entlastet ist, wobei zumindest ein Rückstellelement zwischen dem Standelement und dem Rollenträger angeordnet ist, so dass das Standelement und der Rollenträger über das Rückstellelement direkt miteinander gekoppelt sind, wobei das Rückstellelement auf das Standelement eine Rückstellkraft in Richtung der zweiten vertikalen Richtung ausübt, welche so dimensioniert ist, dass das Standelement von der Rückstellkraft (FR) in der Fahr-Stellung gehalten wird, wobei die Betätigungsvorrichtung einen um einen Drehpunkt schwenkbaren Hebel umfasst, der an dem Rollenträger angelenkt ist, wobei in einer senkrechten Stellung eines Kraftarms des Hebels das Standelement von einem Lastarm des Hebels in der Stand-Stellung eigenstabil gehalten wird, so dass das Standelement des mobilen Ständers auf dem Untergrund steht, und in einer schrägen Stellung des Kraftarms der Lastarm das Standelement freigibt, so dass das zumindest eine Rückstellelement das Standelement in einem vorgegebenen Abstand vom Untergrund in der Fahr-Stellung hält.

Es ist erkannt worden, dass bei herkömmlichen mobilen Ständern, wie sie beispielsweise aus der EP 1 571 277 A1 oder auch aus der EP 2 565 350 A1 bekannt sind, wenn der Wechsel von der Stand- in die Fahr-Stellung erfolgt, nicht nur das Gewicht des Standelements sondern auch das Gewicht des von dem mobilen Ständer gehaltenen Gegenstands angehoben werden muss. Daher muss eine relativ große Kraft aufgewendet werden, um den mobilen Ständer von der Stand-Stellung in die Fahr-Stellung zu bringen. Allein das Standelement wiegt vielfach in etwa 150 kg oder mehr. Für einen typischen von dem mobilen Ständer gehaltenen Gegenstand, beispielsweise einen Marktschirm, kommt leicht noch einmal ein ähnlich großes Gewicht hinzu. Es wird also mit anderen Worten ein sehr großes Gewicht mit der Betätigungsvorrichtung angehoben. Dieser Umstand macht nicht nur das Umschalten des mobilen Ständers von der Stand-Stellung in die Fahr-Stellung zu einem mühsamen und kraftraubenden Vorgang, sondern führt auch dazu, dass beim Absenken des Ständers auf eine beispielsweise als Betätigungsvorrichtung eingesetzte Hebelmechanik ein hohes Drehmoment wirkt. Das kann dazu führen, dass die Betätigungsvorrichtung der Hebelmechanik beim Absenken des Ständers in ihre Ausgangsposition zurückschnellt.

Um den Wechsel zwischen der Stand-Stellung und der Fahr-Stellung des mobilen Ständers weniger anstrengend und sicherer zu machen, ist die Aufnahme zur Kopplung des zu haltenden Gegenstands mit dem mobilen Ständer gemäß Aspekten der Erfindung am Rollenträger vorhanden. Insbesondere ist vorgesehen, dass diese Aufnahme unmittelbar mit dem Rollenträger verbunden ist. Beispielsweise sind diese Bauteile formschlüssig, beispielsweise durch einen Bolzen oder eine Schraube, oder stoffschlüssig miteinander verbunden, beispielsweise verschweißt oder auch verklebt.

Bei herkömmlichen mobilen Ständern, wie sie aus der EP 1 571 277 A1 oder der EP 2 565 350 A1 bekannt sind, ist die Aufnahme, in diesem Fall eine Aufnahmehülse, am Standelement oder Standfuß befestigt. Durch die Befestigung der Aufnahme am Rollenträger werden die beim Übergang von der Stand-Stellung in die Fahr-Stellung (und umgekehrt) bewegten Lasten wesentlich verringert. Bei einem solchen Wechsel von der Stand-Stellung in die Fahr-Stellung muss nicht mehr das schwere Standelement angehoben werden. Dies erleichtert die Handhabung und die Handhabungssicherheit des mobilen Ständers.

Anders als bei herkömmlichen mobilen Ständern wird das Standelement abgesenkt, um den Ständer in seine Stand-Stellung zu bringen. Um einen herkömmlichen Ständer in die Fahr-Stellung zu bringen, wird nämlich das Standelement einschließlich des gehaltenen Schirms angehoben.

Ferner ist bei herkömmlichen Ständern technisch nachteilig, dass in der Fahr-Stellung das Standelement, bei welchem es sich um ein schweres und in vielen Fällen mit Zusatzgewichten beladenes Bauteil handelt, in einer angehobenen Position gehalten werden muss. Hierzu sind entsprechende Betätigungsvorrichtungen vorgesehen. Es kann dennoch vorkommen, dass das Standelement in der Fahr-Stellung bei einem solchen herkömmlichen Ständer gegenüber der Horizontalen leicht geneigt gehalten wird. Es ist somit möglich, dass das Standelement während des Verfahrens des mobilen Ständers hin und her schwingt und beispielsweise bei einer Unebenheit des Untergrunds auf diesen aufsetzt, da der erforderliche Mindestabstand zum Untergrund nicht mehr eingehalten wird. Dies kann zu einem Verkanten oder Blockieren des mobilen Ständers führen. Dieser Effekt wird bei dem mobilen Ständer gemäß Aspekten der Erfindung vorteilhaft vermieden. Da bei diesem in der Fahr-Stellung das Standelement vollständig entlastet ist, kann das Standelement auch mit überschaubarem mechanischem Aufwand präzise in einer zumindest näherungsweise horizontalen Position gehalten werden. Die gesamte Gewichtskraft des zu haltenden Gegenstands und abgesehen vom Standelement auch die Gewichtskraft des mobilen Ständers lastet nämlich auf dem Rollenträger.

Ferner ist insbesondere vorgesehen, dass der Rollenträger und das Standelement in der Standstellung zumindest bereichsweise flächig zur Anlage kommen. Der Rollenträger und das Standelement sind also kraftschlüssig miteinander gekoppelt. Indem die beiden Bauteile beispielsweise großflächig aneinander anliegen, wird vermieden, dass der Rollenträger gegenüber dem Standelement verkippt. Im Ergebnis wird so ein stabiler und sicherer Zustand des mobilen Ständers erreicht.

Es ist gemäß einer Ausführungsform vorgesehen, dass die Rollen des Rollenträgers, unabhängig davon, ob sich der mobile Ständer in der Fahr-Stellung oder in der Stand-Stellung befindet, stets Kontakt zum Untergrund haben. Die Rollen des Rollenträgers werden gemäß dieser Ausführungsform lediglich entlastet aber nicht vom Untergrund abgehoben. Für einen sicheren Stand des mobilen Ständers ist es nämlich lediglich erforderlich, dass das Standelement mit dem Untergrund eine ausreichend große Haftreibung ausbildet, sodass der mobile Ständer sicher und ortsfest aufgestellt werden kann. Gemäß einer weiteren Ausführungsform ist vorgesehen, dass die Rollen des Rollenträgers, wenn sich der mobile Ständer in der Stand-Stellung befindet, um einen sehr geringen Abstand zum Untergrund abgehoben werden. Ausreichend sind beispielsweise wenige Millimeter.

Gemäß einer weiteren Ausführungsform ist der mobile Ständer dadurch fortgebildet, dass zumindest ein Gewicht am Rollenträger, insbesondere lösbar, befestigt ist. Indem dass zumindest eine Gewicht oder Zusatzgewicht am Rollenträger, und nicht wie bisher am Standfuß bzw. Standelement, angeordnet wird/werden, ist es möglich, das Standelement sehr viel leichter zu konstruieren. Dies hat den Vorteil, dass ein Rückstellelement zwischen dem Standelement und dem Rollenträger vorgesehen werden kann, welches in der Stand-Stellung das Standelement in der angehobenen Position hält. Bei angehobenem Stand-Element kann der mobile Ständer verschoben werden. Es ist vorteilhaft nicht notwendig, dieses Rückstellelement sehr stark auszuführen, also mit anderen Worten mit einer hohen Rückstellkraft auszugestalten. Dies wäre erforderlich, wenn die hauptsächliche Masse des Gewichts am Standelement vorhanden wäre.

Der mobile Ständer umfasst zumindest ein Rückstellelement, das zwischen dem Standelement und dem Rollenträger angeordnet ist, so dass das Standelement und der Rollenträger über das Rückstellelement direkt miteinander gekoppelt sind, wobei das Rückstellelement auf das Standelement eine Rückstellkraft in Richtung der Fahr-Stellung ausübt, welches so dimensioniert ist, dass das Standelement von der Rückstellkraft in der Fahr-Stellung gehalten wird.

Erfindungsgemäß ist das Rückstellelement einerseits (beispielsweise an einem ersten Ende) mit dem Standelement und andererseits mit dem Rollenträger verbunden (beispielsweise mit dem gegenüberliegenden zweiten Ende). Das Rückstellelement kann beispielsweise eine Schraubenfeder, eine Biegefeder, eine Torsionsfeder, eine Luftfeder, eine Gasdruckfeder oder eine Elastomerfeder sein. Ferner sind als Rückstellelement jegliche elastische Elemente geeignet, die ähnlich einer Feder geeignet sind, Energie zu speichern und so eine entsprechende Rückstellkraft reversibel bereitzustellen.

Erfindungsgemäß ist vorgesehen, dass die Betätigungsvorrichtung dazu eingerichtet ist, das Standelement entgegen der Rückstellkraft des Rückstellelements in die Stand-Stellung zu verschieben. Das Rückstellelement ist also mit anderen Worten derart ausgestaltet, dass es das Standelement in der Fahr-Stellung hält. Mithilfe der Betätigungsvorrichtung wird das Standelement aus der Fahr-Stellung heraus in die Stand-Stellung verschoben.

Erfindungsgemäß stützt sich die Betätigungsvorrichtung am Rollenträger ab und ist dazu eingerichtet, auf das Standelement eine erste Kraft auszuüben, die in einer ersten vertikalen Richtung zumindest näherungsweise senkrecht auf den Untergrund zeigt und das Standelement in Richtung des Untergrunds in die Stand-Stellung verschiebt, wobei in der Stand-Stellung das Standelement auf dem Untergrund aufsitzt und der Rollenträger in einer der ersten vertikalen Richtung entgegengesetzten zweiten vertikalen Richtung entlastet ist.

Gemäß einer weiteren Ausführungsform ist der mobile Ständer dadurch fortgebildet, dass die Betätigungsvorrichtung dazu eingerichtet ist, das Standelement in einer ersten vertikalen Richtung, die zumindest näherungsweise senkrecht auf den Untergrund zeigt, in Richtung des Untergrunds in die Stand-Stellung zu verschieben, wobei das Standelement in der Stand-Stellung auf dem Untergrund aufsitzt, und wobei die Betätigungsvorrichtung ferner dazu eingerichtet ist, den Rollenträger in einer der ersten vertikalen Richtung entgegengesetzten zweiten vertikalen Richtung zu verschieben und um einen vorgegebenen ersten Abstand größer Null vom Untergrund anzuheben.

Der mobile Ständer wird bevorzugt auf einem flachen Untergrund aufgestellt. Dieser ist im Idealfall horizontal ausgerichtet bzw. nivelliert. Der Begriff "vertikale Richtung" bezieht sich auf die Orientierung einer Richtung in Bezug auf diesen Untergrund. Im idealen Fall ist die erste vertikale Richtung eine Oberflächennormale des Untergrunds und ist entgegengesetzt zur durch die Gravitation erzeugten Gewichtskraft orientiert.

Der erste Abstand kann sehr gering sein und beispielsweise lediglich wenige Millimeter betragen. Wie bereits zuvor erwähnt ist es nicht erforderlich, dass die Rollen des Rollenträgers in der Stand-Stellung tatsächlich vom Untergrund abgehoben werden. Es ist ebenso ausreichend, wenn die an dem Rollenträger befestigten Rollen entlastet werden, der erste Abstand also beliebig klein ist oder gegen Null geht.

Erfindungsgemäß umfasst die Betätigungsvorrichtung einen um einen Drehpunkt schwenkbaren Hebel, der an dem Rollenträger angelenkt ist, wobei in einer senkrechten Stellung eines Kraftarms des Hebels das Standelement von einem Lastarm des Hebels in der Stand-Stellung eigenstabil gehalten wird, so dass das Standelement des mobilen Ständers auf dem Untergrund steht, und in einer schrägen Stellung des Kraftarms der Lastarm das Standelement freigibt, so dass das zumindest eine Rückstellelement das Standelement in einem vorgegebenen zweiten Abstand vom Untergrund in der Fahr-Stellung hält.

Insbesondere ist vorgesehen, dass der zweite Abstand größer ist als der erste Abstand. Der zweite Abstand beträgt beispielsweise wenige Zentimeter, so dass das Standelement einen ausreichenden Abstand von der Oberseite des Untergrunds einhält und, wenn der mobile Ständer in die Fahr-Stellung verbracht ist, dieser problemlos verfahren werden kann.

Vorteilhaft wird ein solcher mobiler Ständer in die Stand-Stellung verbracht, indem der schwenkbare Hebel mit seinem Kraftarm in die senkrechte Stellung gestellt wird. Der Kraftarm und der Lastarm des Hebels können beispielsweise in einem Winkel zueinander angeordnet sein. Dies bedeutet, dass sich der Kraftarm in einer Längsrichtung erstreckt, welche mit einer weiteren Längsrichtung, in der sich der Lastarm erstreckt, einen Winkel einschließt. Ein abgeknickter Bereich zwischen dem Kraft- und dem Lastarm liegt beispielsweise im Bereich des Drehpunktes. Der schwenkbare Hebel ist nun beispielsweise so an diesem Drehpunkt angebracht, dass bei einer Bewegung des Kraftarms von der schrägen Stellung in die senkrechte Stellung erst im letzten Abschnitt dieser Bewegung das Standelement auf den Untergrund gedrückt wird. Mit anderen Worten erfolgt also das minimale Anheben des mobilen Ständers in einem sehr kleinen Winkelbereich von wenigen Grad. Der Winkelbereich, in dem der Kraftarm zum Anheben des mobilen Ständers bewegt wird beträgt beispielsweise maximal 5°, insbesondere maximal 10°, ferner insbesondere maximal 20°. In der schrägen Stellung weist der Kraftarm beispielsweise einen Winkel von 45° zu einer Längsrichtung der im Folgenden näher beschriebenen Aufnahme bzw. der als Aufnahme eingesetzten Hülse auf.

Auf den letzten wenigen Winkelgraden dieser Bewegung muss eine gewisse Kraft aufgebracht werden, um den Rollenträger bzw. die zum Verfahren des mobilen Ständers erforderlichen Rollen zu entlasten oder minimal vom Untergrund anzuheben. Hierzu kann beispielsweise der Kraftarm des Hebels gemeinsam mit der Aufnahme zum Aufnehmen des zu haltenden Gegenstands, gemeinsam mit der Hand umgriffen werden. Ein in diesen letzten Winkelgraden in Richtung der Aufnahme zurückschnellendes Betätigungselement, so wie es teilweise im Stand der Technik auftritt, ist nicht vorhanden. Somit ist der mobile Ständer gemäß Aspekten der Erfindung besonders sicher und außerdem leicht zu handhaben.

Gemäß einer weiteren Ausführungsform ist der mobile Ständer dadurch fortgebildet, dass das Rückstellelement eine Zugfeder ist und der Rollenträger auf einer dem Untergrund abgewandten Seite des Standelements angeordnet ist oder das Rückstellelement eine Druckfeder ist und der Rollenträger auf einer dem Untergrund zugewandten Seite des Standelements angeordnet ist.

Alternativ zu einer Zugfeder kann auch ein anderes elastisches Element eingesetzt werden, welches in gleicher Weise wie eine Zugfeder funktioniert. Gleiches gilt selbstverständlich für die Druckfeder.

Gemäß einer ersten Ausführungsform dieser beiden Ausführungsformen ist der Hauptteil des Rollenträgers auf einer dem Untergrund abgewandten Seite des Standelements angeordnet. Selbstverständlich treten in der Fahr-Stellung die Rollen des Rollenträgers mit dem Untergrund in Kontakt und befinden sich nicht auf der dem Untergrund abgewandten Seite des Standelements. Der weit überwiegende Teil des Rollenträgers, also der weit überwiegende Teil des Systems aus Rollenträgern und Rollen, befindet/befinden sich jedoch auf dieser Seite. Ähnlich verhält es sich bei dem zweiten Ausführungsbeispiel, bei dem der Rollenträger auf der dem Untergrund zugewandten Seite des Standelements angeordnet ist. So muss in der Stand-Stellung das Standelement beispielsweise mithilfe von Beinen oder Füßen mit dem Untergrund in Kontakt stehen und befindet sich aus diesem Grund nicht vollständig auf der dem Untergrund abgewandten Seite des Rollenträgers. Der weit überwiegende Teil des Standelements befindet sich jedoch dort, so dass auch in diesem Sinne der Rollenträger auf einer dem Untergrund zugewandten Seite des Standelements angeordnet ist.

Gemäß einer weiteren Ausführungsform ist der mobile Ständer dadurch fortgebildet, dass die Aufnahme ein Verbindungsflansch, eine Halterung oder eine einseitig nach oben offene und in ihrer Längsrichtung vertikal orientierte Hülse ist, in die der zu haltende Gegenstand einsteckbar ist.

Mit dem Verbindungsflansch ist beispielsweise ein Drehfuß oder die Stange eines zu haltenden Gegenstands, beispielsweise eines Schirms, verbindbar. In die vertikale Hülse wird beispielsweise ein Mast eines Schirms, eines Wäscheständers, eines Verkaufsständers, eines Kleidungsständers, eines Signalschilds, eines Sportgeräts oder dergleichen eingesteckt. Über die vertikal orientierte Hülse werden die von dem zu haltenden Gegenstand angreifenden Kräfte in den mobilen Ständer übertragen.

Der Rollenträger ist insbesondere in sich steif ausgeführt. Hierzu kann der Rollenträger beispielsweise aus einer Metallplatte hergestellt sein. Es ist insbesondere vorgesehen, dass der Rollenträger ein Druckgussteil ist, beispielsweise aus Aluminiumdruckguss. Ebenso ist vorgesehen, dass der Rollenträger ein Gestell, beispielsweise aus Profilen, Rohren oder Stangen ist, welche gemeinsam den Rollenträger bilden. Die Profilrohre oder Stangen können aus verschiedenen Materialien, wie beispielsweise Metall, Granit, Holz, als Gussteil, Schmiedeteil, als laserbearbeitetes, gestanztes oder gefrästes Bauteil aber auch aus Kunststoff, Beton oder Verbundwerkstoffen, hergestellt sein. Auch das Standelement kann verschieden ausgestaltet sein. Ebenso wie bei dem Rollenträger ist es möglich, dass es sich bei diesem um eine Platte handelt, beispielsweise eine Metallplatte. Auch das Standelement kann ein Druckgussteil sein, beispielsweise aus Aluminiumdruckguss. Auch bei dem Standelement kann es sich um ein Gestell aus Profilen, Rohren oder Stangen handeln.

Es ist nicht notwendigerweise erforderlich, dass das Standelement aus einem besonders schweren Material, wie beispielsweise Metall, hergestellt ist. Es ist ebenso möglich, dieses aus einem leichten Material, wie beispielsweise einem Faserverbundmaterial, einem Kunststoff oder dergleichen, herzustellen. Ein leichtes Material ist im Hinblick auf die Dimensionierung der Rückstellkraft des Rückstellelements vorteilhaft. Wird nämlich ein leichtes Standelement verwendet, so kann ein entsprechend klein dimensioniertes Rückstellelement eingesetzt werden. Auf die Stabilität des mobilen Ständers hat dies keinen Einfluss. Besonders vorteilhaft kann ein leichtes Standelement mit der Ausführungsform kombiniert werden, bei der sich die Gewichte am Rollenträger und nicht am Standelement befinden. Erst wenn das Standelement in die Stand-Stellung verbracht wird, greifen über die Betätigungsvorrichtung die Gewichtskräfte auch auf das Standelement ein, so dass zwischen dessen Unterseite und dem Untergrund eine ausreichend große Haftreibung erzeugt wird, die einen ortsfesten und stabilen Stand des mobilen Ständers ermöglicht.

Zum Schutz des mobilen Ständers, insbesondere des Standelements, aber auch zum Schutz des Untergrunds kann das Standelement, insbesondere an seiner Unterseite, beispielsweise mit Füßen, beispielsweise aus Kunststoff oder Gummi, versehen sein. Alternativ ist es möglich, die Unterseite des Standelements mit einer Beschichtung, beispielsweise aus Kunststoff, zu versehen.

Gemäß weiteren Ausführungsbeispielen weist das Standelement Aussparungen auf, in denen sich die an dem Rollenträger befestigten Rollen befinden. Bei einer solchen Ausführungsform erstreckt sich das Standelement über den Bereich hinaus, der von den am Rollenträger vorhandenen Rollen umgeben ist. Es ist ebenso vorgesehen, dass sich das Standelement lediglich innerhalb des von den Rollen umgebenen Bereiches befindet.

Für den mobilen Ständer gibt es eine Vielzahl unterschiedlicher Anwendungsmöglichkeiten. Gemäß weiteren Ausführungsformen ist der mobile Ständer beispielsweise ein Schirmständer, etwa für einen Sonnenschirm, Regenschirm, Marktschirm etc. Der mobile Ständer kann ebenso ein Wäscheständer oder ein Wäschespinnenständer, ein Produkt- oder Verkaufsständer, aber auch ein Ständer für Hinweis-, Verkehrs-, Warn- und/oder Signalschilder, beispielsweise für Barken oder Absperrungen, sein. Ebenso ist es vorgesehen, dass der Ständer ein Sportgeräteständer, beispielsweise für einen Basketballkorb oder ein Volleyballnetz, ist. Ferner ist vorgesehen, dass der Ständer für Stützen von Absperrbändern, beispielsweise auf Flughäfen, vorgesehen ist. Ebenso ist es gemäß weiteren Ausführungsformen vorgesehen, dass der mobile Ständer ein Ständer für mobile Bauzäune oder für einen Tisch oder Stehtisch ist. Der mobile Ständer kann außerdem vorteilhaft als Ständer für einen oder mehrere der zuvor genannten Gegenstände verwendet werden. Die Betätigungsvorrichtung ist beispielsweise mechanisch ausgeführt. Es ist ebenso vorgesehen, dass diese elektrisch, hydraulisch, pneumatisch oder auf andere Weise angetrieben wird. Beispielsweise ist gemäß weiterer Ausführungsformen vorgesehen, dass mittels Photovoltaik erzeugter Strom zum Betrieb eines Elektromotors der Betätigungsvorrichtung eingesetzt wird.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen mobilen Ständer in einer schematisch vereinfachten Querschnittsansicht in der Stand-Stellung,
- Fig. 2: den mobilen Ständer in einer schematisch vereinfachten Querschnittsansicht in Fahr-Stellung,
- Fig. 3: eine schematische Draufsicht auf den mobilen Ständer, wobei die in den Fig. 1 und 2 gezeigten Schnittansichten im Wesentlichen entlang der in Fig. 3 mit A-A bezeichneten und mit strichpunktiert dargestellter Linie dargestellt sind,
- Fig. 4: einen weiteren mobilen Ständer in einer schematisch vereinfachten Querschnittsansicht in Stand-Stellung,
- Fig. 5: diesen mobilen Ständer in Fahr-Stellung,
- Fig. 6: einen weiteren mobilen Ständer in Fahr-Stellung und
- Fig. 7: einen weiteren mobilen Ständer in einer schematisch vereinfachten Querschnittsansicht.

In den Zeichnungen sind jeweils gleiche oder gleichartige Elemente und/oder Teile mit denselben Bezugsziffern versehen, so dass von einer erneuten Vorstellung jeweils abgesehen wird.

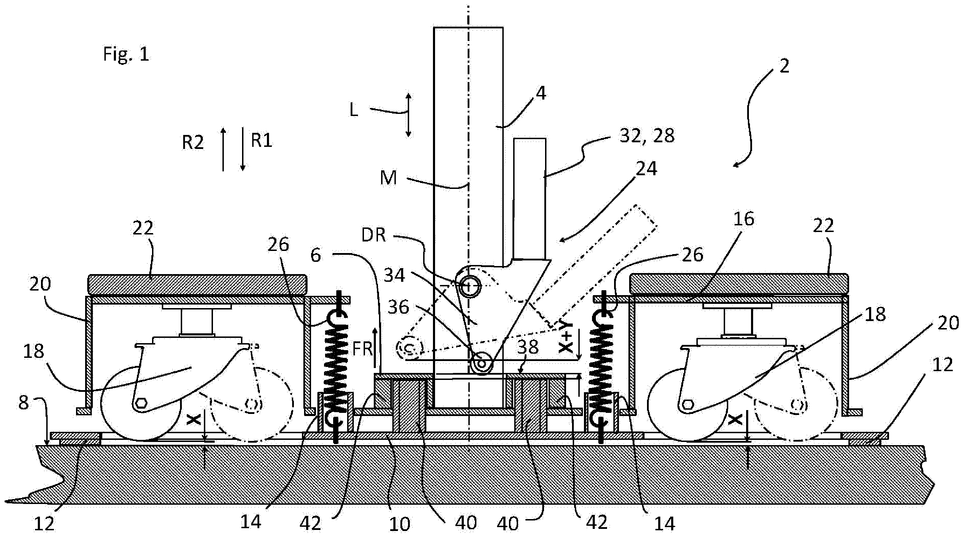

Fig. 1 zeigt einen mobilen Ständer 2 für einen nicht dargestellten zu haltenden Gegenstand, beispielsweise einen Sonnenschirm, einen Marktschirm, ein Hinweis-, Verkehrs-, Warn- und/oder Signalschild, einen Ständer für ein Sportgerät oder auch eine Stütze, beispielsweise für ein Absperrband. Der zu haltende Gegenstand wird in einer Aufnahme 4 aufgenommen, bei der es sich beispielsweise um ein einseitig offenes Aufnahmerohr oder eine Aufnahmehülse handelt. Der mobile Ständer 2 umfasst außerdem ein Standelement 6 zum ortsfesten Aufstellen des Ständers 2 auf einem Untergrund 8 in der in Fig. 1 dargestellten Stand-Stellung. Das Standelement 6 umfasst eine Standplatte 10, die auf ihrer dem Untergrund 8 zugewandten Unterseite Standfüße 12, beispielsweise Kunststoff- oder Gummipuffer, aufweist. Die Standplatte 10 ist beispielsweise plattenförmig, kann aber alternativ auch anders ausgestaltet sein. Beispielsweise kann als Standplatte ein Druckgussteil oder ein Gestänge vorgesehen sein, welches endseitig an Stützen oder Beinen die Standfüße aufweist. Das Standelement 6 umfasst außerdem Führungshülsen 14, die passende Öffnungen in einem Rollenträger 16 durchsetzen. Am Rollenträger 16 sind zumindest drei Rollen 18, vorzugsweise Lenkrollen, befestigt. Dargestellt sind Rollvorrichtungen, also Rollen einschließlich ihrer drehbaren Halterung, welche es erlaubt den mobilen Ständer 2 in beliebiger Richtung auf dem Untergrund 8 zu bewegen. Diese Vorrichtungen sollen allgemein als Rollen 18 bezeichnet werden. Die Rollen 18 sind bevorzugt kreisrund. Ferner sind die Rollen 18 in zwei alternativen Positionen dargestellt. Welche der dargestellten Position eingenommen wird, hängt davon ab, in welche Richtung der mobile Ständer 2 bewegt wird.

In der in Fig. 1 dargestellten Stand-Stellung halten die Rollen 18 einen ersten minimalen Abstand X zur Oberfläche des Untergrunds 8 ein. Der erste Abstand X kann beliebig klein gewählt sein. Wichtig ist, dass die Rollen 18 zumindest entlastet sind. Dies bedeutet im Umkehrschluss, dass das Gewicht des Ständers 2 einschließlich des von diesem gehaltenen Gegenstands auf der Standplatte 10 lastet.

Der Rollenträger 16 umfasst außerdem einen seitlich umlaufenden Kragen 20, der das Eindringen von Schmutz oder Gegenständen in den Bereich der Rollen 18 des mobilen Ständers 2 verhindert. Außerdem dient der Kragen 20 dazu, eine gegebenenfalls beim Kontakt mit den Rollen 18, insbesondere beim Bewegen des mobilen Ständers 2, mögliche Verletzungsgefahr zu minimieren. Zu diesen Zwecken ist es auch möglich, abweichend von der Darstellung in Fig. 1, den mobilen Ständer 2 mit einer Haube zu versehen. Diese umschließt beispielsweise den Rollenträger 16 einschließlich der weiteren Bauteile des mobilen Ständers 2 ausgenommen die Aufnahme 4. Außerdem sollte sie an ihrer dem Untergrund 8 zugewandten Seite offen sein.

An dem Rollenträger 16 sind außerdem optionale Gewichte 22 vorgesehen. Diese dienen dazu, das Gewicht des mobilen Ständers 2 zu erhöhen, um diesem einen sicheren Stand zu verleihen. Um den mobilen Ständer 2 leichter tragen und beispielsweise verstauen zu können, sind die Gewichte 22 insbesondere abnehmbar.

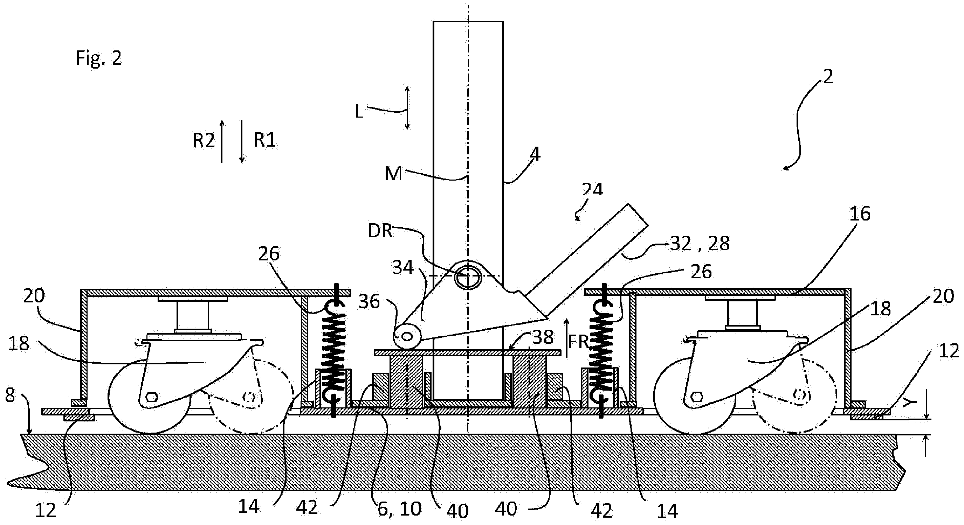

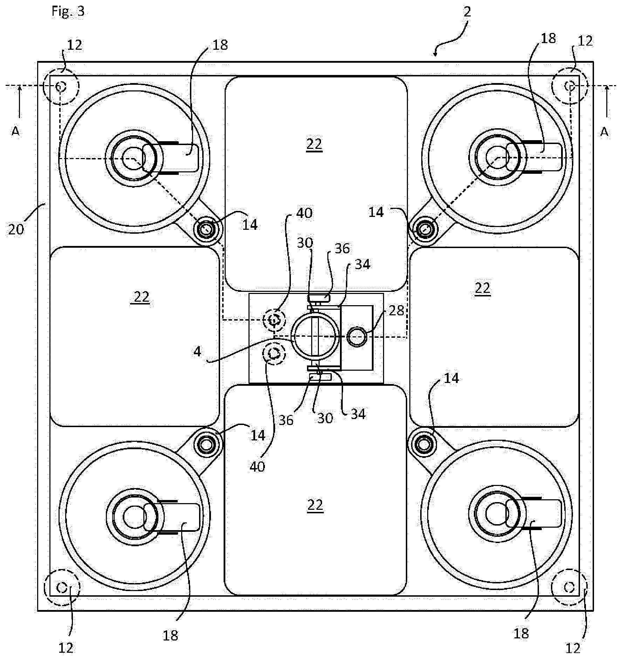

Der mobile Ständer 2 umfasst außerdem eine Betätigungsvorrichtung 24, die in Fig. 1 in zwei verschiedenen Stellungen dargestellt ist. Im Bereich der Betätigungsvorrichtung 24 folgt die Darstellung in Fig. 1 nicht exakt dem in Fig. 3 dargestellten Schnitt entlang der gestrichelt dargestellten Linie A-A. In diesem Bereich ist der mobile Ständer 2 vielmehr in einer Seitenansicht dargestellt. Die Betätigungsvorrichtung 24 ist in einer ersten Position dargestellt, in der ein Aufnahmestutzen 28 senkrecht steht. In dieser Stellung befindet sich der mobile Ständer 2 in seiner Stand-Stellung. Die Betätigungsvorrichtung 24 ist außerdem in einer zweiten Position dargestellt, in der das Standelement 6 freigegeben wird, so dass dieses mittels zweier Rückstellelemente 26 in eine angehobene Stellung zurückgezogen wird. In dieser zweiten Position ist der Aufnahmestutzen 28 schräg angeordnet, beispielsweise in einem Winkel von 45° zu der Aufnahme 4. In Fig. 2 sind zwei der insgesamt vier vorgesehenen Rückstellelemente 26 sichtbar. Gemäß weiterer Ausführungsbeispiele sind andere Anzahlen von Rückstellelementen 26 vorgesehen. Beispielsweise ist ein einziges Rückstellelement vorgesehen, oder es sind zwei Rückstellelemente oder auch mehr als vier Rückstellelemente vorgesehen. Der mobile Ständer 2 befindet sind dann in der Fahr-Stellung. In der Fahr-Stellung zeigt ein Aufnahmestutzen 28 der Betätigungsvorrichtung 24 beispielsweise in eine Richtung, welche zumindest näherungsweise einen Winkel von 45° zu einer Längsrichtung L der Aufnahme 4 einschließt.

Fig. 2 zeigt den mobilen Ständer 2 in dieser Fahr-Stellung, in der die Rollen 18 auf dem Untergrund 8 abrollen. In der Fahr-Stellung ist das Standelement 6 von den Rückstellelementen 26 angehoben. Die Standfüße 12 des Standelements 6 weisen einen zweiten Abstand Y vom Untergrund 8 auf, der größer als der erste Abstand X ist. In der Fahr-Stellung ist der mobile Ständer 2 auf dem Untergrund 8 mit geringem Kraftaufwand verfahrbar.

Die Rückstellelemente 26 sind zwischen dem Standelement 6 und dem Rollenträger 16 angeordnet und koppeln das Standelement 6 und den Rollenträger 16 direkt miteinander. Beispielsweise ist ein erstes Ende des Rückstellelements 26 mit dem Standelement 6 und ein zweites gegenüberliegendes Ende mit dem Rollenträger 16 verbunden. Die Rückstellelemente 26 üben auf das Standelement 6 eine Rückstellkraft FR in Richtung der in Fig. 2 gezeigten Fahr-Stellung aus. Die Rückstellelemente 26 sind so dimensioniert, dass das Standelement 6 von dieser Rückstellkraft FR in der Fahr-Stellung gehalten wird. Mit anderen Worten kompensieren die Rückstellelemente 26 zumindest die Gewichtskraft des Standelements 6.

Die Betätigungsvorrichtung 24 ist dazu eingerichtet, das Standelement 6 entgegen der Rückstellkraft FR der Rückstellelemente 26 in die Stand-Stellung zu verschieben. Hierzu stützt sich die Betätigungsvorrichtung 24 am Rollenträger 16 ab. In dem in den Fig. 1 und 2 dargestellten Ausführungsbeispiel handelt es sich bei der Betätigungsvorrichtung 24 um eine Exzentergabel mit einem Aufnahmestutzen 28 für eine Teleskopstange. Die Exzentergabel bildet einen um einen Drehpunkt DR schwenkbaren Hebel, der an dem Rollenträger 16 angelenkt ist. Im dargestellten Ausführungsbeispiel ist der Drehpunkt DR durch einen zu beiden Seiten an der Aufnahme 4 vorhandenen Bolzen 30 gebildet. Somit stützt sich die Betätigungsvorrichtung 24 mittelbar am Rollenträger 16 ab, nämlich über die Aufnahme 4.

Fig. 3 zeigt eine schematische Draufsicht auf den mobilen Ständer 2, wobei die in den Fig. 1 und 2 gezeigten schematisch vereinfachten Schnittansichten im Wesentlichen entlang der in Fig. 3 mit A-A bezeichneten Linie, die strichpunktiert dargestellt ist, vorgenommen sind. In Fig. 3 sind die seitlich an der Aufnahme 4 vorhandenen Bolzen 30 sichtbar.

Der die Betätigungsvorrichtung 24 bildende schwenkbare Hebel umfasst einen Kraftarm 32, der beispielsweise durch die in den Aufnahmestutzen 28 eingesteckte Teleskopstange verlängert werden kann. Über den Kraftarm 32 wird die zum Verstellen des mobilen Ständers 2 erforderliche Kraft in die Betätigungsvorrichtung 24 eingebracht. Das an dem Kraftarm 32 eingetragene Drehmoment wird über eine Drehung um den Drehpunkt DR an einen Lastarm 34 übertragen, der im dargestellten Ausführungsbeispiel als zwei im Wesentlichen parallel zueinander orientierte Platten ausgebildet ist. Endseitig umfasst der Lastarm 34 je eine Rolle 36, die auf einer Betätigungsfläche 38 des Standelements 6 abrollt.

In einer senkrechten Stellung des Kraftarms 32 hält der Hebel das Standelement 6 über seinen Lastarm 34 in der in Fig. 1 dargestellten Stand-Stellung. Da die Rolle 36 eine Mittenebene M, in welcher sich die Bolzen 30 erstrecken und somit die Drehpunkte DR liegen, überschritten hat, ist die Position des maximalen Hubs überschritten. Die Stand-Stellung ist daher eigenstabil. Damit sich der Kraftarm 32 nicht über die senkrechte Stellung hinaus weiter in Richtung der Aufnahme 4 bewegt, ist beispielsweise eine Klickhalterung vorgesehen, welche den Kraftarm 32 in seiner senkrechten Stellung aufnimmt und außerdem lösbar fixiert. Wird der Kraftarm 32 in Fig. 1 im Uhrzeigersinn geschwenkt, so rollt die Rolle 36 auf der Betätigungsfläche 38 des Standelements 6 ab und die Rückstellelemente 26 verbringen durch die von ihnen aufgebrachte Rückstellkraft FR das Standelement 6 in die in Fig. 2 gezeigte Fahr-Stellung. Hierbei hebt sich das Standelement 6 vom Untergrund 8 ab, so dass der mobile Ständer 2 frei verfahrbar wird. Diese Hub-Bewegung des Standelements 6 wird von den Führungshülsen 14 geführt, um ein Verkanten und mögliches Blockieren des Standelements 6 während dieser Bewegung zu vermeiden. Dies wird unterstützt durch Verbindungsstreben 40 zwischen der Standplatte 10 und dem Teil des Standelements 6, welches auf seiner Oberseite die Betätigungsfläche 38 ausbildet. Die Verbindungsstreben 40 sind durch den Rollenträger 16 hindurchgeführt und wirken als weitere Führungshülsen 14. Außerdem sind Stabilisierungselemente 42 vorgesehen, beispielsweise Gummipuffer oder dergleichen, welche eine sichere und spielfreie Anlage des Rollenträgers 16 an dem Standelement 6 in der Stand-Stellung erlauben.

Ein Vergleich zwischen Fig. 1 und 2 macht einen wichtigen Aspekt des im vorliegenden Text beschriebenen erfindungsgemäßen Ausführungsbeispiels deutlich: Die Aufnahme 4 für den aufzunehmenden Gegenstand und der Rollenträger 16 sind aneinander befestigt.

Die Verbindung dieser beiden Bauteile ist beispielsweise formschlüssig realisiert, beispielsweise durch eine Schraube. Alternativ handelt es sich um eine stoffschlüssige Verbindung, beispielsweise eine Schweißverbindung. Die Tatsache, dass die Aufnahme 4 und der Rollenträger 16 aneinander befestigt sind, hat den Vorteil, dass beim Wechsel des mobilen Ständers 2 zwischen der Stand-Stellung und der Fahr-Stellung lediglich das Standelement 6 angehoben werden muss. Bei herkömmlichen Lösungen muss bei dieser Bewegung die Aufnahme 4 einschließlich des aufgenommenen Gegenstands, beispielsweise eines Marktschirms oder eines Hinweisschildes, eines Sportgerätes oder dergleichen, angehoben werden. Das anzuhebende Gewicht ist bei diesen bekannten Ständern wesentlich größer als es bei dem mobilen Ständer 2, welcher gemäß einem erfindungsgemäßen Ausführungsbeispiel ausgestaltet ist, der Fall ist.

Vorteilhaft wird das Standelement 6 über die Rückstellelemente 26 angehoben. Lediglich in den letzten wenigen Graden der Bewegung, mit der der Kraftarm 32 in die in Fig. 1 dargestellte senkrechte Stellung gebracht wird, muss eine gewisse Kraft aufgewendet werden. Bei dieser Bewegung wird der erforderliche minimale erste Abstand X zwischen den Rollen 18 und dem Untergrund 8 hergestellt. Die Rollen 18 sind in diesem Zustand vollständig entlastet. Es ist ebenso möglich, dass dieser erste Abstand X gegen Null geht und die Rollen 18 lediglich entlastet oder zum überwiegenden Teil entlastet werden. Entscheidend ist, dass in der Stand-Stellung die Standfüße 12 des Standelements 6 mit einem ausreichend hohen Anteil der Gewichtskraft des mobilen Ständers 2 belastet werden, so dass eine ausreichend große Haftreibung zwischen dem Untergrund 8 und den Standfüßen 12 vorhanden ist und der mobile Ständer 2 einen stabilen und rutschfesten Stand hat.

Zum Verfahren zwischen der Fahr-Stellung (Fig. 2) und der Stand-Stellung (Fig. 1) übt die Betätigungsvorrichtung 24, welche sich am Rollenträger 16 abstützt, auf das Standelement 6 eine erste Kraft aus, die in eine erste vertikale Richtung R1 gerichtet ist und zumindest näherungsweise senkrecht auf einer durch den Untergrund 8 definierten Ebene steht. Diese erste Kraft verschiebt das Standelement 6 in Richtung des Untergrunds 8 in die Stand-Stellung (Fig. 1). In der Stand-Stellung sitzt das Standelement 6 auf dem Untergrund 8 auf und der Rollenträger 16 wird in einer der ersten vertikalen Richtung R1 entgegengesetzten zweiten vertikalen Richtung R2 entlastet. Insbesondere wird der Rollenträger 16, genauer dessen Rollen 18, um den vorgegebenen ersten Abstand X vom Untergrund 8 angehoben. Diese Bewegung wird beispielsweise erreicht, indem der Lastarm 34 des Hebels von der schrägen Stellung in eine senkrechte Stellung gebracht wird, in der der Lastarm 34 das Standelement 6 auf den Untergrund 8 presst.

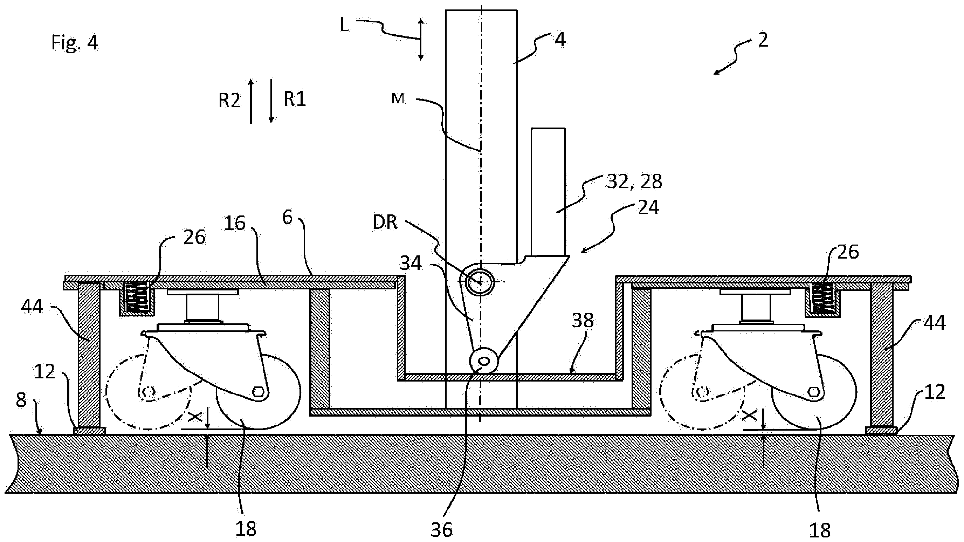

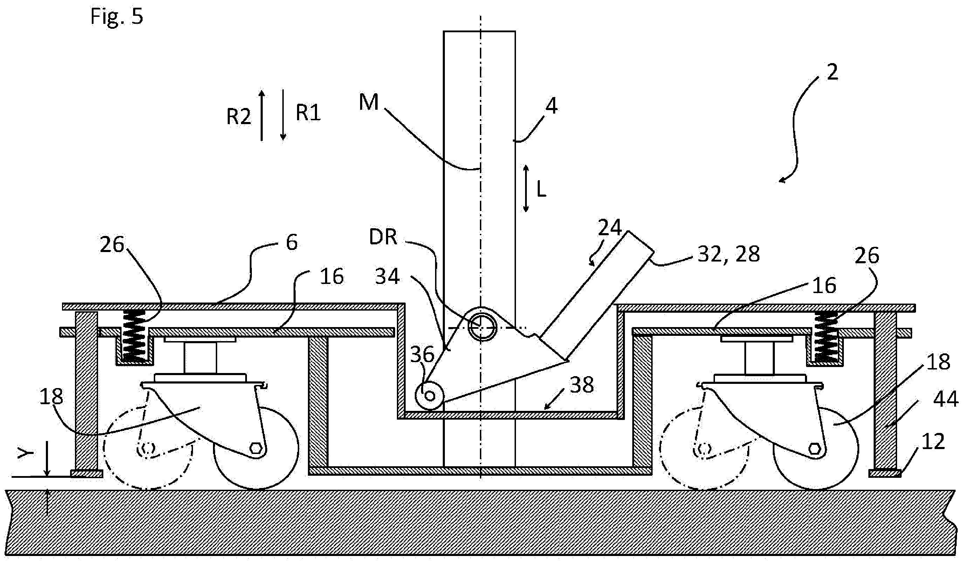

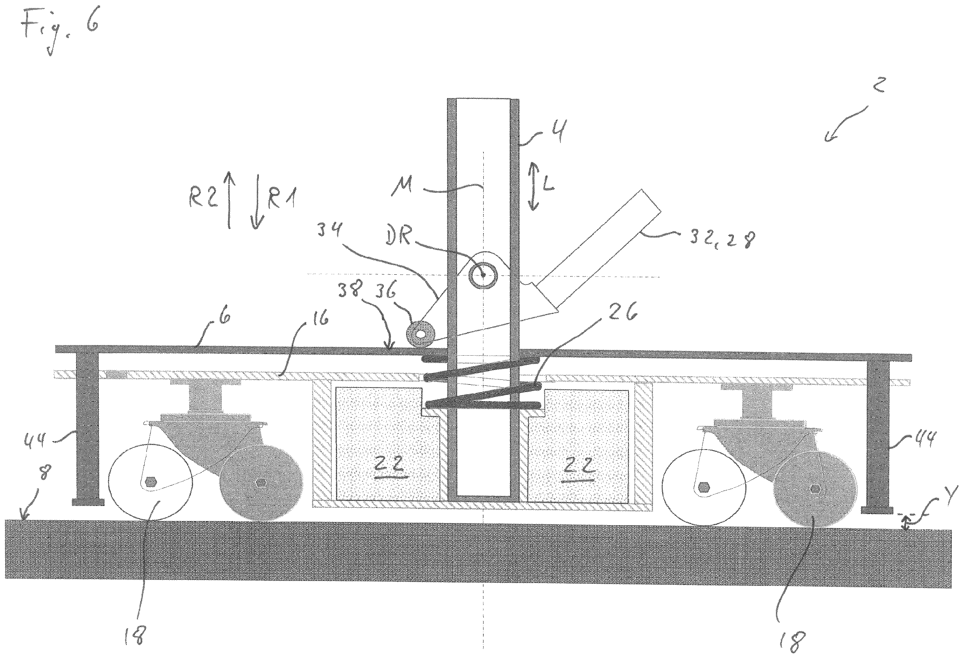

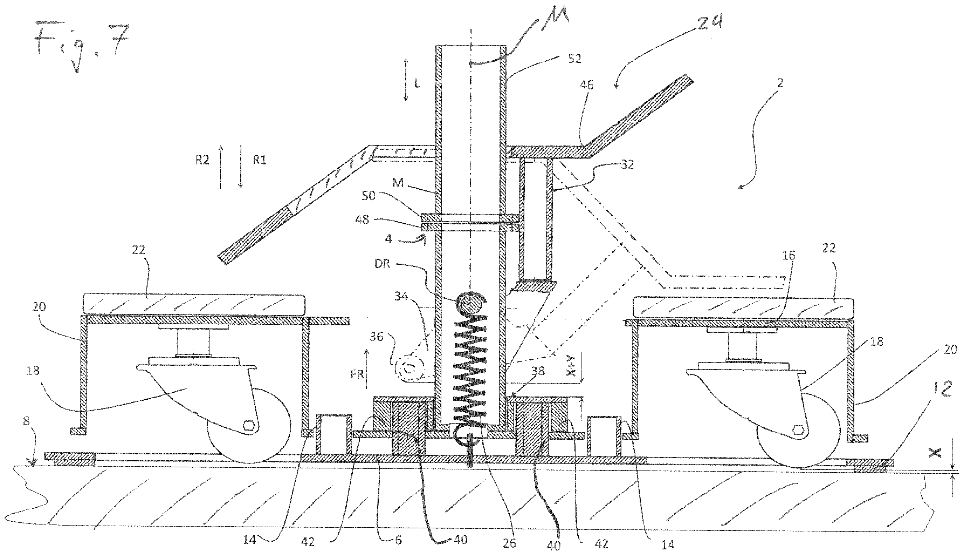

Fig. 4 zeigt einen weiteren mobilen Ständer 2 in seiner Stand-Stellung. Fig. 5 zeigt diesen mobilen Ständer 2 in der Fahr-Stellung. Fig. 6 zeigt in einer weiteren schematisch vereinfachten Querschnittsansicht einen weiteren mobilen Ständer 2 in Fahr-Stellung, Fig. 7 einen weiteren mobilen Ständer 2 in einer schematisch vereinfachten Querschnittsansicht.

In den Fig. 1 bis 3 ist ein erstes Ausführungsbeispiel des mobilen Ständers 2 gezeigt, bei dem die Rückstellelemente 26 beispielsweise Zugfedern sind. Der Rollenträger 16 ist auf einer dem Untergrund 8 abgewandten Seite des Standelements 6 zumindest zum überwiegenden Teil angeordnet. Die Fig. 4 und 5 zeigen ein weiteres Ausführungsbeispiel für einen mobilen Ständer 2, bei dem die Rückstellelemente 26 beispielsweise Druckfedern sind. Fig. 6 zeigt ein weiteres Ausführungsbeispiel, bei dem lediglich ein einziges Rückstellelement 26 vorgesehen ist. Auch dieses ist als Druckfeder ausgebildet. Fig. 7 zeigt einen mobilen Ständer 2 gemäß einem weiteren Ausführungsbeispiel, bei dem die Betätigungsvorrichtung 24 mittels eines Fußpedals 46 bedient wird.

Gemäß der in den Fig. 4 bis 6 gezeigten Ausführungsbeispiele befindet sich der Rollenträger 16 auf einer dem Untergrund 8 zugewandten Seite des Standelements 6. das Standelement 6 weist Standfüße 44 auf, welche den Rollenträger 16 durchsetzen. Das Standelement 6 befindet sich somit zwar nicht vollständig jedoch zum weit überwiegenden Teil auf der dem Untergrund 8 abgewandten Seite des Rollenträgers 16.

Das in Fig. 6 gezeigte Ausführungsbeispiel weist außerdem zusätzliche Gewichte 22 auf, welche am Rollenträger 16 vorhanden sind. Die in Fig. 4 bis 6 gezeigten mobilen Ständer 2 sind ferner bevorzugt mit einer nicht dargestellten Abdeckhaube versehen, welche die Hebelmechanik vor Verunreinigungen schützt und außerdem die Verletzungsgefahr verringert.

Die Aufnahme 4 ist in allen Ausführungsbeispielen bevorzugt eine in ihrer Längsrichtung L zumindest näherungsweise vertikal orientierte Hülse, welche an ihrem oberen Ende offen ist und an ihrem unteren Ende mit dem Rollenträger 16 verbunden ist. Entlang der Längsrichtung L ist der von dem mobilen Ständer 2 zu haltende Gegenstand in die Aufnahme 4 einsteckbar.

Das Standelement 6 sowie der Rollenträger 16 sind beispielsweise aus Platten, insbesondere Metallplatten, hergestellt. Es ist ebenso vorgesehen, dass diese Bauteile aus einem Druckgussteil, beispielsweise aus Aluminiumdruckguss, oder einem Gestänge, welches beispielsweise aus Profilen oder Stangen zusammengeschweißt ist, hergestellt sind. Alternativ ist eine Verbindung durch Kleben, Schrauben, Nieten oder dergleichen möglich.

Die Standplatte 10 ist ebenfalls beispielsweise plattenförmig. Es ist jedoch nicht erforderlich, dass diese plattenförmig ist. Auch die Standplatte 10 kann als Druckgussteil oder als Gestänge ausgebildet sein. Außerdem ist es nicht erforderlich, dass die Standplatte 10 aus einem besonders schweren Werkstoff wie beispielsweise Metall hergestellt ist. Es ist ebenso vorgesehen, dass die Standplatte 10 beispielsweise aus einem Kunststoffverbundmaterial hergestellt ist.

Fig. 7 zeigt einen weiteren mobilen Ständer 2 gemäß einem Ausführungsbeispiel. Der mobile Ständer 2 umfasst als Betätigungsvorrichtung 24 ein Fußpedal 46, welches mit dem Kraftarm 32 der Betätigungsvorrichtung 24 gekoppelt ist, insbesondere verbunden ist, beispielsweise form- oder stoffschlüssig. Mit Hilfe des Fußpedals 46 wird der mobile Ständer 2 zwischen der Stand-Stellung und der Fahr-Stellung hin und her geschaltet, so wie dies zuvor im Zusammenhang mit den anderen Ausführungsbeispielen, insbesondere dem in den Fig. 1 und 2, erläutert wurde. Außerdem umfasst der mobile Ständer 2 eine Aufnahme 4, welche als ein Verbindungsflansch 48 ausgebildet ist. Dieser Verbindungsflansch 48 wirkt beispielsweise mit einem Gegenflansch 50 zusammen, welcher sich beispielsweise an einer Hülse 52 zur Aufnahme eines Schirms befindet. Alternativ kann der Gegenflansch 50 an einem Drehfuß oder direkt an einer Stange eines zu haltenden Gegenstands, beispielsweise eines Schirms, vorhanden sein. Selbstverständlich können auch die übrigen in den vorhergehenden Figuren gezeigten Ausführungsbeispiele mit einer Betätigungsvorrichtung 24, welche ein Fußpedal 46 umfasst, oder mit einer Aufnahme 4 in Form eines Verbindungsflansches 48 versehen werden.

Außerdem umfasst das in Fig. 7 gezeigte Ausführungsbeispiel ein zentrales Rückstellelement 26 in Form einer Zugfeder. Diese übt die Rückstellkraft FR auf das Standelement 6 aus. Das Rückstellelement 26 ist beispielsweise zentral in dem unteren rohrförmigen Abschnitt der Aufnahme 4 geführt. Hierfür sind in dieser sowie in dem Rollenträger 16 und in der Betätigungsfläche 38 entsprechende Durchbrüche vorhanden. Ein einzelnes zentral geführtes Rückstellelement 26 ist besonders vorteilhaft, da dieses innenliegend und somit von außen nicht zugänglich ist. Ein solches zentrales Rückstellelement 26 kann selbstverständlich auch bei einer der übrigen Ausführungsformen vorgesehen sein.

Die Betätigungsvorrichtung 24 ist bei den gezeigten Ausführungsbeispielen mechanisch ausgeführt. Es ist ebenso vorgesehen, dass diese elektrisch, hydraulisch, pneumatisch oder auf andere Weise angetrieben wird. Beispielsweise ist denkbar, dass mittels Photovoltaik erzeugter Strom zum Betrieb eines Elektromotors eingesetzt wird, welcher eine Mechanik betätigt, um mittels der Betätigungsvorrichtung 24 den mobilen Ständer von der Stand-Stellung in die Fahr-Stellung zu verfahren.

### Bezuqszeichenliste

- 2: mobiler Ständer
- 4: Aufnahme
- 6: Standelement
- 8: Untergrund
- 10: Standplatte
- 12: Standfüße
- 14: Führungshülsen
- 16: Rollenträger
- 18: Rollen
- 20: Kragen
- 22: Gewichte
- 24: Betätigungsvorrichtung
- 26: Rückstellelement
- 28: Aufnahmestutzen
- 30: Bolzen
- 32: Kraftarm
- 34: Lastarm
- 36: Rolle
- 38: Betätigungsfläche
- 40: Verbindungsstreben
- 42: Stabilisierungselemente
- 44: Standfüße
- 46: Fußpedal
- 48: Verbindungsflansch
- 50: Gegenflansch
- 52: Hülse
- X: erster Abstand
- Y: zweiter Abstand
- FR: Rückstellkraft
- DR: Drehpunkt
- M: Mittenebene
- R1: erste vertikale Richtung
- R2: zweite vertikale Richtung
- L: Längsrichtung

## Patentansprüche

1. Mobiler Ständer (2) für einen zu haltenden Gegenstand, umfassend ein Standelement (6) zum ortsfesten Aufstellen des Ständers (2) auf einem Untergrund (8) in einer Stand-Stellung, einen Rollenträger (16) mit mindestens drei Rollen (18), die dazu vorgesehen sind, in einer Fahr-Stellung auf dem Untergrund (8) abzurollen, so dass der Ständer (2) mobil ist, eine Aufnahme (4), über die der zu haltende Gegenstand mit dem Ständer (2) koppelbar ist, und eine Betätigungsvorrichtung (24), mit der das Standelement (6) zwischen der Stand-Stellung und der Fahr-Stellung verschoben werden kann, wobei die Aufnahme (4) an dem Rollenträger (16) befestigt ist, wobei sich die Betätigungsvorrichtung (24) am Rollenträger (16) abstützt und dazu eingerichtet ist, auf das Standelement (6) eine erste Kraft auszuüben, die in einer ersten vertikalen Richtung (R1) zumindest näherungsweise senkrecht auf den Untergrund (8) zeigt und das Standelement (6) in Richtung des Untergrunds (8) in die Stand-Stellung verschiebt, wobei in der Stand-Stellung das Stand-element (6) auf dem Untergrund (8) aufsitzt und der Rollenträger (16) in einer der ersten vertikalen Richtung (R1) entgegengesetzten zweiten vertikalen Richtung (R2) entlastet ist, wobei zumindest ein Rückstellelement (26) zwischen dem Standelement (6) und dem Rollenträger (16) angeordnet ist, so dass das Standelement (6) und der Rollenträger (16) über das Rückstellelement (26) direkt miteinander gekoppelt sind, wobei das Rückstellelement (26) auf das Standelement (6) eine Rückstellkraft (FR) in Richtung der zweiten vertikalen Richtung (R2) ausübt, welche so dimensioniert ist, dass das Standelement (6) von der Rückstellkraft (FR) in der Fahr-Stellung gehalten wird, wobei die Betätigungsvorrichtung (24) einen um einen Drehpunkt (DR) schwenkbaren Hebel umfasst, der an dem Rollenträger (16) angelenkt ist, **dadurch gekennzeichnet, dass** in einer senkrechten Stellung eines Kraftarms (32) des Hebels das Standelement (6) von einem Lastarm (34) des Hebels in der Stand-Stellung eigenstabil gehalten wird, so dass das Standelement (6) des mobilen Ständers (2) auf dem Untergrund (8) steht, und in einer schrägen Stellung des Kraftarms (32) der Lastarm (34) das Standelement (6) freigibt, so dass das zumindest eine Rückstellelement (26) das Standelement (6) in einem vorgegebenen Abstand (Y) vom Untergrund (8) in der Fahr-Stellung hält.

2. Mobiler Ständer (2) nach Anspruch 1, **dadurch gekennzeichnet, dass** zumindest ein Gewicht (22) am Rollenträger (16), insbesondere lösbar, befestigt ist.

3. Mobiler Ständer (2) nach Anspruch 1, **dadurch gekennzeichnet, dass** die Betätigungsvorrichtung (24) dazu eingerichtet ist, das Standelement (6) entgegen der Rückstellkraft (FR) des Rückstellelements (26) in die Stand-Stellung zu verschieben.

4. Mobiler Ständer (2) nach einem der Ansprüche 1 bis 3, **dadurch gekennzeichnet, dass** die Betätigungsvorrichtung (24) dazu eingerichtet ist, das Standelement (6) in einer ersten vertikalen Richtung (R1), die zumindest näherungsweise senkrecht auf den Untergrund (8) zeigt, in Richtung des Untergrunds (8) in die Stand-Stellung zu verschieben, wobei das Standelement (6) in der Stand-Stellung auf dem Untergrund (8) aufsitzt, und wobei die Betätigungsvorrichtung (24) ferner dazu eingerichtet ist, den Rollenträger (16) in einer der ersten vertikalen Richtung (R1) entgegengesetzten zweiten vertikalen Richtung (R2) zu verschieben und um einen vorgegebenen ersten Abstand (X) größer Null vom Untergrund (8) anzuheben.

5. Mobiler Ständer (2) nach Anspruch 1, **dadurch gekennzeichnet, dass** das Rückstellelement (26) eine Zugfeder ist und der Rollenträger (16) auf einer dem Untergrund (8) abgewandten Seite des Standelements (6) angeordnet ist oder das Rückstellelement (26) eine Druckfeder ist und der Rollenträger (16) auf einer dem Untergrund (8) zugewandten Seite des Standelements (6) angeordnet ist.

6. Mobiler Ständer (2) nach einem der Ansprüche 1 bis 5, **dadurch gekennzeichnet, dass** die Aufnahme (4) ein Verbindungsflansch, eine Halterung oder eine einseitig nach oben offene und in ihrer Längsrichtung (L) vertikal orientierte Hülse ist, in die der zu haltende Gegenstand einsteckbar ist.

## Claims

1. A mobile stand (2) for an object to be held, comprising a stand element (6) for stationary installation of the stand (2) on a ground (8) in a standing position, a roller carrier (16) having at least three rollers (18) which are configured to roll in a traveling position on the ground (8) in that the stand (2) is mobile, a mount (4), via which the object to be held can be coupled to the stand (2), and an actuating device (24), with which the stand element (6) can be displaced between the standing position and the traveling position, wherein the mount (4) is fastened to the roller carrier (16), wherein the actuating device (24) is supported on the roller carrier (16) and is designed to exert a first force on the stand element (6), said first force pointing in a first vertical direction (R1) at least approximately perpendicularly to the ground (8) and displacing the stand element (6) in the direction of the ground (8) into the standing position, wherein in the standing position the stand element (6) is seated on the ground (8) and the roller carrier (16) is relieved in a second vertical direction (R2) which is opposite the first vertical direction (R1), wherein at least one return element (26) is arranged between the stand element (6) and the roller carrier (16) in that the stand element (6) and the roller carrier (16) are directly coupled to one another via the return element (26), wherein the return element (26) exerts a return force (FR) on the stand element (6) in the direction of the second vertical direction (R2) which is dimensioned in that the stand element (6) is held by the return force (FR) in the traveling position, wherein the actuating device (24) comprises a lever which can be swiveled about a fulcrum point (DR), said lever being hinged to the roller carrier (16), **characterized in that** in a perpendicular position of a force arm (32) of the lever, the stand element (6) is held in an inherently stable manner by a load arm (34) of the lever in the standing position **in that** the stand element (6) of the mobile stand (2) stands on the ground (8), and in an inclined position of the force arm (32), the load arm (34) releases the stand element (6) **in that** the at least one return element (26) holds the stand element (6) at a predefined distance (Y) from the ground (8) in the traveling position.

2. The mobile stand (2) according to Claim 1, **characterized in that** at least one weight (22) is fastened, in particular detachably, to the roller carrier (16).

3. The mobile stand (2) according to Claim 1, **characterized in that** the actuating device (24) is designed to displace the stand element (6) against the return force (FR) of the return element (26) into the standing position.

4. The mobile stand (2) according to any one of Claims 1 to 3, **characterized in that** the actuating device (24) is designed to displace the stand element (6) in a first vertical direction (R1), which points at least approximately perpendicularly to the ground (8), in the direction of the ground (8) into the standing position, wherein the stand element (6) is seated in the standing position on the ground (8), and wherein the actuating device (24) is additionally designed to displace the roller carrier (16) in a second vertical direction (R2) which is opposite the first vertical direction (R1) and to raise it by a predefined first distance (X) greater than zero from the ground (8).

5. The mobile stand (2) according to Claim 1, **characterized in that** the return element (26) is a tension spring and the roller carrier (16) is arranged on a side of the stand element (6) facing away from the ground (8), or the return element (26) is a compression spring and the roller carrier (16) is arranged on a side of the stand element (6) facing the ground (8).

6. The mobile stand (2) according to any one of Claims 1 to 5, **characterized in that** the mount (4) is a connecting flange, a holding device or a sleeve which is open upwardly on one side and is vertically oriented in its longitudinal direction (L), into which sleeve the object to be held can be inserted.

## Revendications

1. Support mobile (2) pour un objet à maintenir, comprenant un élément de support (6) pour un positionnement stationnaire du support (2) sur un sol (8) dans une position d'immobilisation, un support de roulettes (16) avec au moins trois roulettes (18) qui sont prévues pour rouler sur le sol (8) en position de déplacement, afin que le support (2) soit mobile, un élément de réception (4), par lequel l'objet à maintenir est apte à être relié au support (2), et un dispositif d'actionnement (24), au moyen duquel l'élément de support (6) est apte à être déplacé entre la position d'immobilisation et la position de déplacement, l'élément de réception (4) étant fixé au support de roulettes (16), le dispositif d'actionnement (24) s'appuyant sur le support de roulettes (16) et étant adapté pour exercer une première force sur l'élément de support (6), qui est orientée dans une première direction verticale (R1) au moins approximativement perpendiculairement au sol (8) et qui déplace l'élément de support (6) en direction du sol (8) dans la position d'immobilisation, l'élément de support (6) reposant sur le sol (8) dans la position d'immobilisation et le support à roulettes (16) étant dégagé dans une deuxième direction verticale (R2) opposée à la première direction verticale (R1), au moins un élément de rappel (26) étant disposé entre l'élément de support (6) et le support de roulettes (16), de sorte que l'élément de support (6) et le support de roulettes (16) sont directement reliés l'un à l'autre par l'intermédiaire de l'élément de rappel (26), l'élément de rappel (26) exerçant une force de rappel (FR) sur l'élément de support (6) dans la direction de la deuxième direction verticale (R2), qui est dimensionnée de telle sorte que l'élément de support (6) soit maintenu dans la position de déplacement par la force de rappel (FR), le dispositif d'actionnement (24) comprenant un levier articulé sur le support à roulettes (16), apte à pivoter autour d'un point de pivotement (DR), **caractérisé en ce que**, dans une position verticale d'un bras d'actionnement (32) du levier, l'élément de support (6) est maintenu de manière intrinsèquement stable dans la position d'immobilisation par un bras de mise sous charge (34) du levier, de sorte que l'élément de support (6) du support mobile (2) repose sur le sol (8), et, dans une position inclinée du bras d'actionnement (32), le bras de mise sous charge (34) libère l'élément de support (6) de sorte qu'au moins un élément de rappel (26) maintient l'élément de support (6) à une distance prédéterminée (Y) du sol (8) dans la position de déplacement.

2. Support mobile (2) selon la revendication 1, **caractérisé en ce qu'**au moins un poids (22) est fixé au support à roulettes (16), notamment de manière amovible.

3. Support mobile (2) selon la revendication 1, **caractérisé en ce que** le dispositif d'actionnement (24) est adapté pour déplacer l'élément de support (6) dans la position d'immobilisation, à l'encontre de la force de rappel (FR) exercée par l'élément de rappel (26).

4. Support mobile (2) selon l'une des revendications 1 à 3, **caractérisé en ce que** le dispositif d'actionnement (24) est agencé pour déplacer l'élément de support (6) en direction du sol (8) selon une première direction verticale (R1) qui est dirigée au moins approximativement perpendiculairement au sol (8), jusque dans la position d'immobilisation, l'élément de support (6) reposant contre le sol (8) dans une position d'immobilisation, et le dispositif d'actionnement (24) étant en outre adapté pour déplacer le support de roulettes (16) dans une deuxième direction verticale (R2) opposée à la première direction verticale (R1) et pour le soulever du sol (8) sur une première distance (X) prédéterminée, supérieure à zéro.

5. Support mobile (2) selon la revendication 1, **caractérisé en ce que** l'élément de rappel (26) est un ressort de traction et le support de roulettes (16) est agencé sur un côté de l'élément de support (6) opposé au sol (8), ou l'élément de rappel (26) est un ressort de compression et le support de roulettes (16) est agencé sur un côté de l'élément de support (6) tourné vers le sol (8).

6. Support mobile (2) selon l'une des revendications 1 à 5, **caractérisé en ce que** l'élément de réception (4) est une bride de fixation, un support ou un manchon ouvert à une extrémité vers le haut et orienté verticalement dans sa direction longitudinale (L), dans lequel l'objet à maintenir est apte à être inséré.
